Europäisches Patentamt

European Patent Office

Office européen des brevets

(19)

(11) EP 1 209 490 A2

(12) EUROPEAN PATENT APPLICATION

(43) Date of publication:
29.05.2002 Bulletin 2002/22

(51) Int Cl.7: G02B 3/02

(21) Application number: 01126496.7

(22) Date of filing: 12.11.2001

(84) Designated Contracting States:
AT BE CH CY DE DK ES FI FR GB GR IE IT LI LU
MC NL PT SE TR
Designated Extension States:
AL LT LV MK RO SI

(30) Priority: 16.11.2000 JP 2000350144
30.07.2001 JP 2001230651
30.07.2001 JP 2001230652

(71) Applicant: VICTOR COMPANY OF JAPAN, LTD.
Yokohama-Shi, Kanagawa-Ken (JP)

(72) Inventors:
• Itonaga, Makoto
  Yokohama-shi, Kanagawa-ken (JP)
• Ito, Fumihiko
  Kawasaki-shi, Kanagawa-ken (JP)

(74) Representative: HOFFMANN - EITLE
Patent- und Rechtsanwälte
Arabellastrasse 4
81925 München (DE)

(54) Objective lens for optical disk

(57)    There is disclosed an objective lens (21, 31, 41) for an optical disk, comprising a bi-aspherical single lens having a numerical aperture of 0.7 or more, wherein a center thickness of the lens is larger than a focal distance.

FIG.3

EP 1 209 490 A2

**Description**

BACKGROUND OF THE INVENTION

1. Field of the Invention

The present invention relates to an objective lens having a high numerical aperture (NA) which realizes a large-capacity optical disk.

2. Description of the Related Art

In a conventional CD disk, an objective lens whose numerical aperture is in a range of 0.45 to 0.5 is used, and reading or writing is performed with a laser beam having a wavelength of about 780 nm. Moreover, in a DVD disk, the objective lens having a numerical aperture of about 0.6 is used, and reading or writing is performed with the laser beam which has a wavelength of about 650 nm.

On the other hand, a next-generation optical disk pickup system in which the laser beam having a shorter wavelength and the lens having a higher numerical aperture are used has been developed in order to enhance a capacity of the optical disk.

Moreover, so-called blue laser having a wavelength of 400 nm is considered as the laser which has the shorter wavelength.

Furthermore, for the objective lens having the higher numerical aperture, a system in which a single lens having a numerical aperture of 0.7 is used, or a system in which a two-group lens having a numerical aperture of 0.85 is used has been reported.

The former is reported in Jpn. J. Appl. Phys. Vol. 39 (2000) pp. 978-979 M. Itonaga et al. "Optical Disk System Using a High-Numerical Aperture Single Objective Lens and a Blue LD".

The latter is reported in Jpn. J. Appl. Phys. Vol. 39 (2000) pp. 937-942 I. Ichimura et al. "Optical Disk Recording Using a GaN Blue-Violet Laser Diode".

In the aforementioned latter system in which the two-group lens is used, the numerical aperture is high as compared with the former system. However, since an assembling process is necessary, and two lenses are also necessary, mass productivity is deteriorated and cost also increases.

Therefore, an optical pickup having a simpler constitution by the single lens has been desired as the next-generation system. Here, an objective lens for the optical disk, having a numerical aperture larger than 0.7, has been desired in the optical pickup in which the single lens is used.

In general, problems for bringing the single lens having a high or large numerical aperture into practical use are that (1) a manufacturing tolerance becomes strict and (2) designed properties are deteriorated.

Here, (1) the manufacturing tolerance means an interval tolerance between incidence and emission surfaces in a bi-asymmetrical lens (a lens with two asymmetrical surfaces), an interval tolerance (eccentricity tolerance) between geometric centers of the incidence and emission surfaces, a tolerance of inclination between the incidence and emission surfaces, or the like. For example, the eccentricity tolerance is determined based on an increase amount of wavefront aberration when there is eccentricity. However, the manufacturing tolerance can be realized by improvement and enhancement of a manufacturing technique. That is, it is possible to manufacture the lens in which the tolerance is secured in a range of several micrometers to several tens of micrometers.

On the other hand, (2) the deterioration of designed properties indicates deterioration of properties in lens design. In further detail, the deterioration means generation of an aberration with respect to an out-of-axis light beam (hereinafter referred to as the out-of-axis aberration) and a spherical aberration in a best image surface in each wavelength with respect to an axial light beam having a plurality of wavelengths (hereinafter referred to as a best image surface chromatic aberration). Here, the axial light beam means a light beam which is incident in parallel to the optical axis of the lens, and the out-of-axis light beam means a light beam which is incident in an inclined manner with respect to the optical axis of the lens. That is, it is possible to design the lens such that the spherical aberration is not generated with respect to the axial light beam having a design reference wavelength. However, regarding the out-of-axis aberration and best image surface chromatic aberration, it is difficult to obtain better values as compared with the conventional objective lens for CD or DVD.

The problem of the out-of-axis aberration is as follows in further detail.

Even when the lens is designed without considering the manufacturing tolerance, the out-of-axis aberration is generally inferior to the conventional aberration. This is because with a larger numerical aperture a light beam having a large inclination angle with respect to the optical axis is incident.

Moreover, when the manufacturing tolerance is considered, the out-of-axis aberration is further deteriorated. This respect will be described hereinafter in more detail. A most important tolerance among the manufacturing tolerances is the eccentricity tolerance. That is, with a molded lens, the eccentricity between lens surfaces is determined by attachment precision of upper and lower molds, looseness during attachment (the mold moves during molding, and the looseness includes an allowance of sliding during molding, and an allowance of contraction by temperature change during molding), and the like. An inclination between the surfaces is sometimes generated with the eccentricity. However, the inclination and eccentricity have considerably close influence on the aberration, and an amount to be handled is of a μm order and is considerably small. Therefore, the inclination and eccentricity are usually collectively treated as the eccentricity. The tolerance indicates an essential value for manufacturing. For example, in the conventional lens for the DVD, having a low NA, even when there is eccentricity of about 10 μm in the design, it is possible to design and suppress the increase of the aberration to 0.02 λ or less. Moreover, a process for suppressing the eccentricity to 10 μm is established. Furthermore, it is also possible to obtain a precision, for example, of about 5 μm or less by a recent improvement of the process. However, when the allowance of sliding, or the like is considered, it is considerably difficult to set the precision to 1 to 2 μm or less.

Therefore, it is necessary to secure a certain degree of eccentricity tolerance in the lens design. For this, it is necessary to sacrifice the axial and out-of-axis aberrations. That is, the lens is designed so as to have a certain degree of the axial and out-of-axis aberrations, and it is thereby necessary to realize the lens which can substantially maintain the lens properties as a result, even with generation of the eccentricity. In this case, the axial aberration is only slightly deteriorated. However, in the lens having a large numerical aperture exceeding 0.6, the eccentricity tolerance of micron order which can realize manufacturing cannot be secured without considerably sacrificing the out-of-axis aberration.

Comparison with the lens for the DVD will be described hereinafter. For example, in the lens for the DVD having a focal distance of 3.3 mm and a thickness of 2 mm, for example, when the lens having an eccentricity tolerance of 5 μm is designed, the lens having the out-of-axis aberration of 0.03 λ or less with respect to an incident light of 0.5 degree can easily be manufactured.

However, with a high numerical aperture lens using a short wavelength laser beam, it is difficult to manufacture such lens.

On the other hand, as described above, the best image surface chromatic aberration is a spherical aberration generated when the wavelength of the laser beam deviates from the designed wavelength of the lens and is evaluated on the best image surface with respect to the laser wavelength. This will be described hereinafter in further detail.

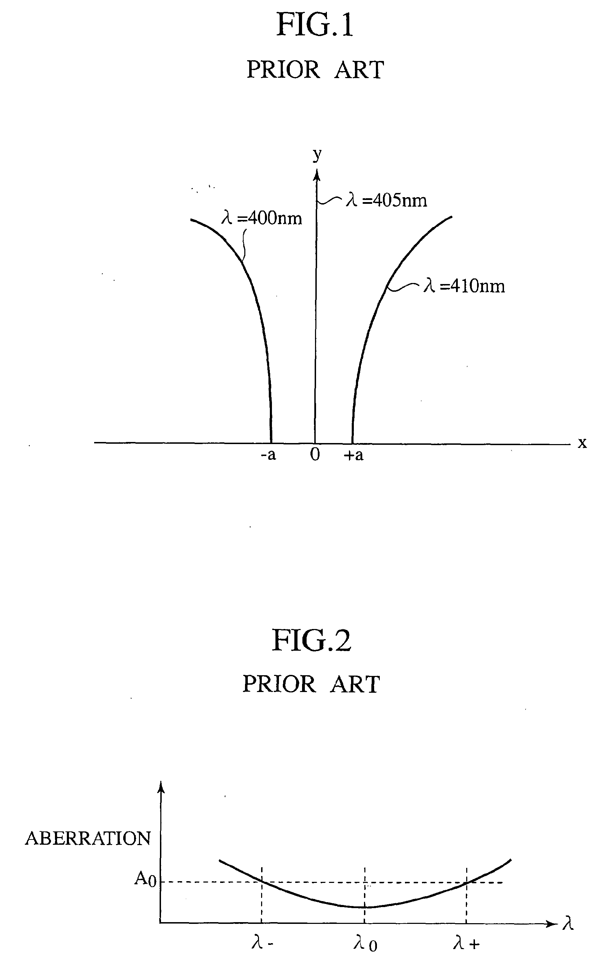

FIG.1 is a diagram showing a longitudinal aberration generated with respect to lights of 400 nm and 410 nm, when the aberration is compensated for with respect to the light of 405 nm. A curved line indicating the longitudinal aberration means that there is a spherical aberration.

In FIG.1, for example, when the laser wavelength deviates from 405 nm as the design reference wavelength and fluctuates to 410 nm, the best image surface with respect to the laser wavelength changes to a position of x=+a from a position of x=0. In the diagram of the longitudinal aberration of 410 nm with the position fluctuation, a light beam high in light beam height (i.e., with a large value of y) intersects the optical axis in a position different from that of a main light beam and thus the spherical aberration is generated as shown in FIG.1.

FIG.2 shows a relation between the best image surface chromatic aberration and the wavelength when the aberration is evaluated as an amount of wavefront aberration (the relation will hereinafter be referred to as a best image surface chromatic aberration characteristic).

As shown in FIG.2, the best image surface chromatic aberration characteristic has a minimum value in a design reference wavelength λ0 of the lens, and has a larger value with deviation from the design reference wavelength. Therefore, a wavelength range λ± (maximum wavelength λ+, minimum wavelength λ-) in which the lens can be used is determined from the best image surface chromatic aberration characteristic of FIG.2.

The best image surface chromatic aberration of the lens for the DVD will be described hereinafter.

For example, with the design of the lens having an eccentricity tolerance of 5 μm in the lens for the DVD having a focal distance of 3.3 mm and thickness of 2 mm, a wavelength in which the best image surface chromatic aberration can be suppressed to 0.02 λ or less with generation of a wavelength change ranges from 615 nm to 700 nm, and indicates a very broad range.

However, the best image surface chromatic aberration characteristic becomes strict in a wavelength range of blue laser, and it is difficult to obtain a broad wavelength range.

A reason why the best image surface chromatic aberration characteristic becomes strict with respect to the short-wavelength light in this manner is that a fluctuation of a refractive index with the wavelength is large. Moreover, the aberration is inversely proportional to the wavelength, and becomes large. Therefore, for the wavelength of 450 nm, the wavelength is 70% as compared with 650 nm for use in the DVD. As a result, the precision tolerance is 70%. With the increase of the numerical aperture, the aberration by this increase is multiplied.

Furthermore, there is a demand for an objective lens whose focal distance is as short as possible in order to miniaturize the pickup. This demand is intense when the lens is used in a data recording drive for a mobile use, such as a video camera. From this respect, the focal distance of the objective lens is desired to be set, for example, to 2.2 mm or less.

Furthermore, there is a demand for a lens having an operation distance of 0.2 mm or more in order to avoid collision with the disk. Additionally, when the focal distance is shortened, the operation distance is generally shortened. However, when a diameter of the disk for use is 80 mm to 50 mm or less, there is little side-runout. Therefore, there is no problem in commercialization with the operation distance of 0.2 mm or more.

SUMMARY OF THE INVENTION

A first object of the present invention is to solve the aforementioned problem, and to provide an objective lens for an optical disk, which is superior in a best image surface chromatic aberration characteristic and out-of-axis aberration characteristic and which has a moderate eccentricity tolerance.

A second object of the present invention is to solve the aforementioned problem, and to provide an objective lens for an optical disk, which is constituted of a single lens having a numerical aperture of 0.7 to 0.8, which can be used in the optical disk having a 0.3 mm or thinner reproducing transmission layer, and which has the following characteristics (1) to (4) with respect to a light having a wavelength of about 400 nm.

(1) An eccentricity tolerance between opposite surfaces of the lens is in a manufacturable range.
(2) The lens has an excellent axial aberration characteristic.
(3) An out-of-axis aberration characteristic is little deteriorated.
(4) An operation distance is broad (preferably 0.2 mm or more).
   A third object of the present invention is to solve the aforementioned problem, and to provide an objective lens for an optical disk, which is constituted of a single lens having a numerical aperture of 0.78 or more, which can be used in the optical disk having a 0.3 mm or thinner reproducing transmission layer, and which has the following characteristics (5) to (8) with respect to a light having a wavelength of about 400 nm.
(5) An eccentricity tolerance between opposite surfaces of the lens is in a manufacturable range.
(6) The lens has an excellent axial aberration characteristic.
(7) An out-of-axis aberration characteristic is little deteriorated.
(8) An operation distance is broad (preferably 0.3 mm or more).

To achieve the aforementioned objects, there is provided an objective lens for an optical disk, comprising a bi-aspherical single lens having a numerical aperture of 0.7 or more, wherein a center thickness of the lens is more than a focal distance.

According to the objective lens, a declination during refraction in a first surface of the lens can be reduced. This means that a curvature radius of the first surface can be reduced and an angle formed by a normal of the first surface and an optical axis can be reduced. Therefore, a change of a refraction angle with a change of a wavelength can be minimized and generation of a spherical aberration can be inhibited. That is, a chromatic aberration in a best image surface can be improved. Also for the aberration with respect to an out-of-axis light beam, a change of a direction of an incident light has a reduced influence on a change of the refraction angle after emission from the first surface, and the out-of-axis aberration can be minimized.

In a preferred embodiment of the present invention, an image forming magnification in a design reference wavelength is 0 times.

Here, the design reference wavelength is a wavelength employed as a reference in designing the lens, and the lens allows the light having the design reference wavelength, including an out-of-axis light beam and axial light beam, to most sharply converge on the same image surface.

Since the image forming magnification is set to 0 times as described above, an interferometer can be used to easily measure the properties singly with the lens, and a high-degree quality control can be achieved.

In another preferred embodiment of the present invention, the design reference wavelength is shorter than 0.45 $\mu$m.

In further preferred embodiment of the present invention, the focal distance is shorter than 4.0 mm and longer than **t** represented by the following equation.

$$t = d/n + 0.9 \text{ (mm)}$$

Here, **d** denotes a thickness of the optical disk, and n denotes a refractive index of the optical disk.

When the focal distance is set to be longer than **t**, an operation distance (distance between a tip end of the lens and the surface of the disk) of 0.3 mm or more can be secured. In further detail, when an operation distance of 0.25 mm or more is secured, a possibility of collision of the lens with the disk can be reduced. That is, a disk formed of plastic has a warpage. An amount of warpage also depends on a diameter of the disk. For example, a side-runout of the disk for the next-generation system, having a size of 120 mm, is considered to be about ±0.2 mm. Therefore, with the operation distance of 0.25 mm or more, in combination of a devise (e.g., avoidance control of the lens with a defect) on a control circuit side, a danger of collision of the disk with the lens can be reduced to a necessary and sufficient degree. Of course, with use of a disk system in which other techniques such as a servo technique are applied to assure the avoidance of collision of the disk with the lens, or to permit the collision, or with use of a smaller-diameter disk (e.g., movie), a lens having a shorter focal distance can also be used.

Moreover, when the focal distance is designed to 4.0 mm or less, a diameter of a light flux can be set to 5.6 mm or less even with a numerical aperture of 0.7 or more, and miniaturization of the pickup can be assured. Furthermore, the lens can also be kept to be miniaturized and lightened, a broad range characteristic of an actuator for use in a focus servo or a tracking servo can be held, and a servo characteristic requiring a broad band can be obtained.

Furthermore, to achieve the aforementioned object, there is provided an objective lens for an optical disk, comprising a single lens having at least one surface formed in an aspheric shape and having a numerical aperture of 0.7 to 0.8 and an operation distance of 0.2 mm or more, and satisfying the following condition.

$$0.85 < d_1/f < 1.5$$

$$0 > d_1/R2 > -0.7$$

$$n > 1.6$$

Here, $f$ denotes a focal distance of the lens, $d_1$ denotes a center thickness of the lens, and R2 denotes a curvature radius in a vertex of the lens on an optical disk side, and **n** denotes a refractive index of the lens.

In the preferred embodiment of the present invention, the focal distance is 2.2 mm or less.

In the preferred embodiment of the present invention, a thickness of a transmission layer of the optical disk is 0.3 mm or less.

Moreover, to achieve the object, there is provided an objective lens for an optical disk, comprising a single lens having at least one surface formed in an aspheric shape and having a numerical aperture of 0.78 or more, and satisfying the following condition.

$$d_1/f > 1.2$$

$$0.65 < R1/f < 0.95$$

$$|R1/R2| < 0.7$$

$$n > 1.65$$

Here, **f** denotes a focal distance of the lens, $d_1$ denotes a center thickness of the lens, R1 denotes a curvature radius in a vertex of the lens on a light source side, R2 denotes a curvature radius in the vertex of the lens on an optical disk side, and **n** denotes a refractive index of the lens.

In the preferred embodiment of the present invention, the operation distance is 0.3 mm or more.

In the preferred embodiment of the present invention, a thickness of a transmission layer of the optical disk is 0.3 mm or less.

The nature, principle and utility of the invention will become more apparent from the following detailed description when read in conjunction with the accompanying drawings.

BRIEF DESCRIPTION OF THE DRAWINGS

In the accompanying drawings:

FIG.1 is an explanatory view of a best image surface chromatic aberration;

FIG.2 is an explanatory view showing a fluctuation of the best image surface chromatic aberration when a laser beam having a wavelength deviating from a design reference wavelength is incident upon a lens, and showing a usable range of the lens in relation to the best image surface chromatic aberration;

FIG.3 is an explanatory view of a first embodiment of an objective lens for an optical disk according to the present invention;

FIG.4 is a diagram showing a relation between a center thickness D of the lens and aberration when a light beam having an inclination angle of 0.5 degree with respect to an optical axis of the objective lens of the first embodiment is incident;

FIG.5 is a diagram showing a relation between the center thickness D of the lens and the best image surface aberration (rms) when the laser beam having a wavelength of 410 nm is incident upon the objective lens of the first embodiment;

FIG.6 is a diagram of a second embodiment of the objective lens for the optical disk according to the present invention;

FIG.7 is a diagram showing a longitudinal aberration of the objective lens of the second embodiment with respect to laser beams of 400 nm, 405 nm, 410 nm;

FIG.8 is a diagram of a third embodiment of the objective lens for the optical disk according to the present invention;

FIG.9 is a diagram showing the longitudinal aberration of the respective incident beams when the laser beams of 400 nm, 405 nm, 410 nm are incident upon the objective lens of the third embodiment;

FIG.10 is an explanatory view of a fourth embodiment of the objective lens for the optical disk according to the present invention;

FIG.11 is a longitudinal aberration diagram of Example 4-1 of the fourth embodiment;

FIG.12 is an astigmatism diagram of Example 4-1 of the fourth embodiment;

FIG.13 is a longitudinal aberration diagram of Example 4-2 of the fourth embodiment;

FIG.14 is an astigmatism diagram of Example 4-2 of the fourth embodiment;

FIG.15 is an explanatory view of a fifth embodiment of the objective lens for the optical disk according to the present invention;

FIG.16 is a longitudinal aberration diagram of Example 5-1 of the fifth embodiment;

FIG.17 is an astigmatism diagram of Example 5-1 of the fifth embodiment;

FIG.18 is a longitudinal aberration diagram of Example 5-2 of the fifth embodiment; and

FIG.19 is an astigmatism diagram of Example 5-2 of the fifth embodiment.


DESCRIPTION OF THE PREFERRED EMBODIMENTS

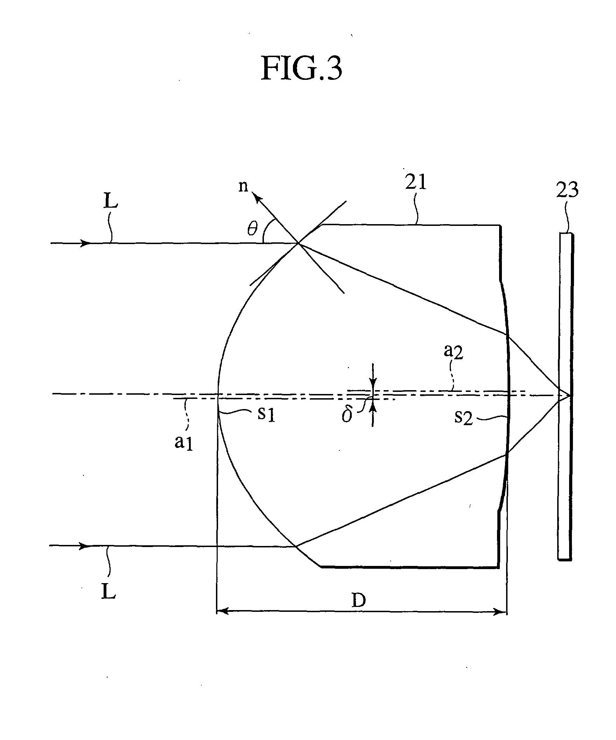

Embodiments of the present invention will be described hereinafter in detail with reference to FIGS.3 to 19.


<First Embodiment>

FIG.3 shows an optical-disk objective lens 21 according to a first embodiment of the present invention and an optical disk 23 for use together with the objective lens 21.

The optical-disk objective lens 21 of the first embodiment is a bi-aspherical single lens (a single lens with two aspheric surfaces) generally having a design reference wavelength shorter than 450 nm, a numerical aperture of 0.7 or more, and a center thickness D of the lens more than a focal distance.

In further detail, the design reference wavelength of the objective lens 21 is set to 405 nm.

Moreover, the numerical aperture (NA) of the objective lens 21 is designed to 0.75.

Furthermore, the focal distance of the objective lens 21 is 2.5 mm, and an image forming magnification in the design reference wavelength of 405 nm is 0 times.

Additionally, when an eccentricity $\delta$ between a first surface S1 and a second surface S2 (distance between a geometric center axis a1 of the surface S1 and a geometric center axis a2 of the surface S2) is 5 $\mu$m, an aberration (eccentricity characteristic) is designed to be 0.03 $\lambda$ or less.

Moreover, a glass type of the lens is as follows.

NbF1 (refractive index nd = 1.7433, Abbe number $\nu$d = 49.22)

Moreover, the optical disk 23 is designed as follows.

Thickness of cover glass: 0.11 mm (polycarbonate 0.1 mm + acrylic 0.01 mm).

Furthermore, the objective lens 21 is designed such that aberration with respect to a light beam parallel to an axis, that is, an axial aberration has a size of about 0.003 $\lambda$ (rms).

Here, **rms** means a root mean square. Moreover, $\lambda$ denotes a design reference wavelength, and is 405 nm in the first embodiment.

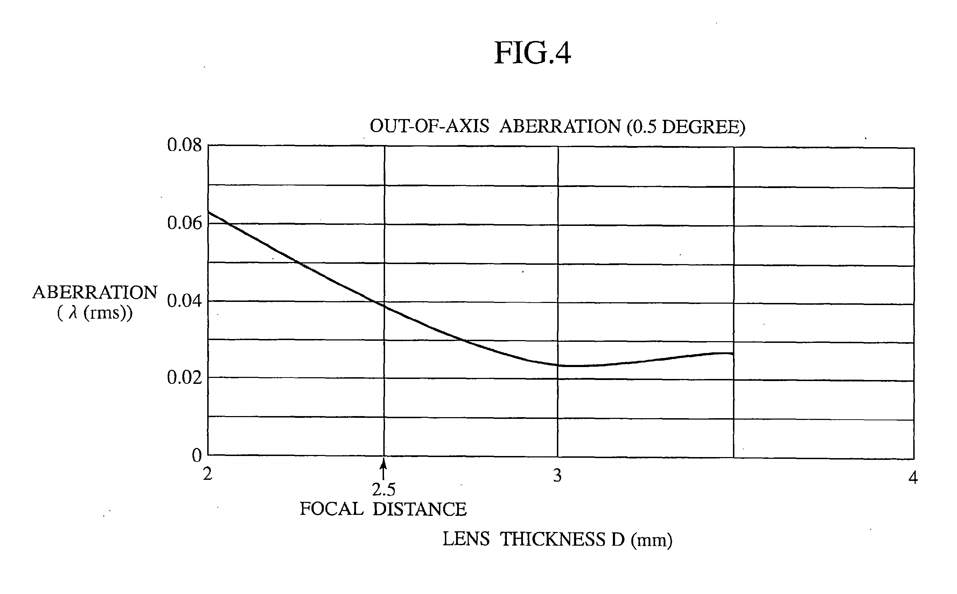

FIG.4 shows a fluctuation of an out-of-axis aberration with a change of the center thickness D of the lens in the objective lens 21 of the first embodiment.

Here, as described above, the out-of-axis aberration means aberration generated on a focal surface when the light beam is incident at an inclination angle with respect to an optical axis of the lens. Additionally, it is assumed in FIG. 4 that the light beam is incident at an angle of 0.5 degree with respect to the optical axis.

FIG.4 shows values calculated by a light beam tracking method with respect to the objective lens 21.

As understood from FIG.4, when the lens thickness D is larger than the focal distance (2.5 mm), the aberration becomes smaller than 0.04 λ (rms) and a satisfactory converged image can be obtained.

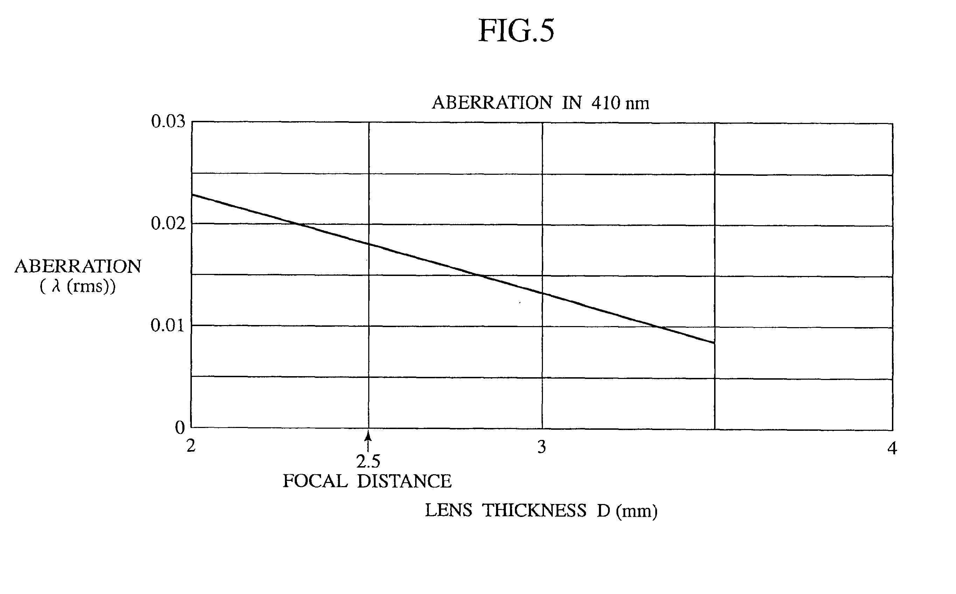

FIG.5 shows a change of the best image surface chromatic aberration with a change of the center thickness D of the lens in the objective lens 21 of the first embodiment.

In further detail, the change of a spherical aberration (rms) of the light beam having a wavelength of 410 nm deviating from a design reference wavelength of 405 nm is shown with the change of the lens thickness D.

As understood from FIG.5, the spherical aberration (rms) in 410 nm also indicates a sufficiently small value (smaller than 0.02 λ in FIG.5) when the center thickness D of the lens is larger than a focal distance of 2.5 mm.

Therefore, according to the first embodiment, when the center thickness D of the lens is set to be larger than the focal distance, a satisfactory best image surface chromatic aberration characteristic and out-of-axis aberration characteristic can be obtained. Moreover, according to the lens of the first embodiment, when the center thickness D of the lens is set to be larger than the focal distance of 2.5 mm, a usable range of a laser wavelength can be broadened.

Additionally, the values of out-of-axis aberration and best image surface chromatic aberration of FIGS.4 and 5 differ with differences of designs such as the numerical aperture of the lens and a type of glass forming the lens. The values also differ with specifications of the lens. For example, when the focal distance is shortened, the characteristic regarding the aberration is enhanced as a natural result. However, when the center thickness of the lens is set to be larger than the focal distance in a bi-asymmetrical single lens (a single lens with two asymmetrical surfaces) having a light wavelength shorter than 450 nm and a numerical aperture of 0.7 or more, the objective lens for the optical disk having a satisfactory chromatic aberration characteristic and out-of-axis aberration characteristic can be made. This respect can be considered in a generalized manner.

Therefore, with the design reference wavelength shorter than 0.45 μm and the numerical aperture of 0.7 or more, when the center thickness D of the lens is set to be larger than the focal distance, the satisfactory best image surface chromatic aberration characteristic and out-of-axis aberration characteristic can be obtained.

Moreover, in the first embodiment, when the image forming magnification in the design reference wavelength is set to 0 times, an interferometer can be used to easily measure the properties singly with the lens, and a high-degree quality control can be achieved.

Furthermore, when there is an increase of spherical aberration by a manufacturing error of the lens, a thickness error of the disc, a temperature change, or the like, parallelism of the light incident upon the objective lens is changed, spherical aberration of an opposite direction is generated, and the generated spherical aberration can be compensated for by the spherical aberration of the opposite direction. Additionally, when the spherical aberration is generated by the lens manufacturing error, the image forming magnification deviates from 0 times.

<Second Embodiment>

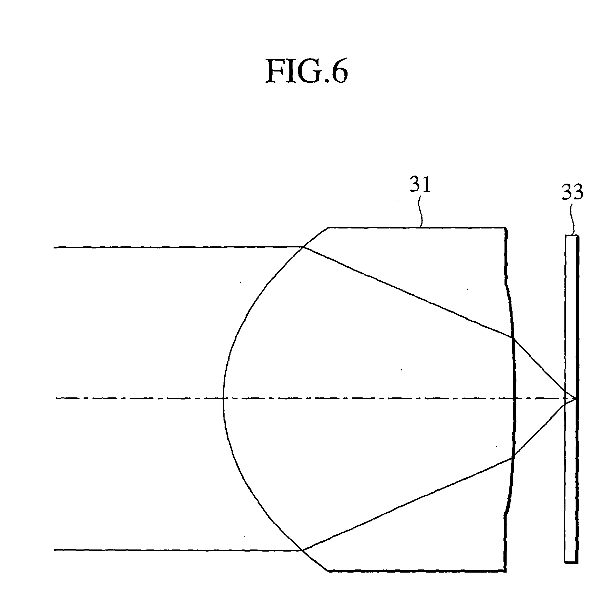

FIG.6 shows an optical-disk objective lens 31 according to a second embodiment of the present invention and an optical disk 33 for use together with the objective lens 31.

Lens specifications of the optical-disk objective lens 31 of the second embodiment are shown in Table 1.

Table 1:

| Specifications on lens | |
|---|---|
| Designed wavelength | 405 nm |
| NA | 0.75 |
| Focal distance | 2.5 mm |
| Entrance pupil diameter | 3.75 mm |

Moreover, lens designed values of the objective lens 31 are shown in Table 2.

Table 2:

| Designed values of lens | | | | | |
|---|---|---|---|---|---|
| Surface number | Surface shape | Radius | Thickness | Glass | Conic constant |
| 1 | Aspheric surface | 2.075403 | 3.500002 | NBF1 | -0.2798963 |
| 2 | Aspheric surface | -6.962995 | 0.598987 | | -529.1943 |
| 3 | | Infinity | 0.1 | POLYCARB | |
| 4 | | Infinity | 0.01 | ACRYLIC | |
| Image surface | | | | | |

Here, third and fourth surfaces indicate the designed values of the optical disk 33.

Moreover, a refractive index of each glass of Table 2 is shown in Table 3.

Table 3:

| Refractive index | |
|---|---|
| NBF1 | 1.76898499 |
| POLYCARB | 1.62230752 |
| ACRYLIC | 1.50650420 |

Furthermore, aspheric coefficients of first and second surfaces of the objective lens 31 are shown in Tables 4 and 5.

Table 4:

| Aspheric surface coefficient First surface | |
|---|---|
| Coefficient A4 of $r^4$ | -0.00174879 |
| Coefficient A6 of $r^6$ | -0.00015845294 |
| Coefficient A8 of $r^8$ | -0.00033158263 |
| Coefficient A10 of $r^{10}$ | 8.7997012e-005 |
| Coefficient A12 of $r^{12}$ | -1.7681848e-005 |

Table 5:

| Aspheric surface coefficient Second surface | |
|---|---|
| Coefficient A4 of $r^4$ | 0.031198858 |
| Coefficient A6 of $r^6$ | -0.056548233 |
| Coefficient A8 of $r^8$ | 0.033199766 |
| Coefficient A10 of $r^{10}$ | -0.00049162717 |
| Coefficient A12 of $r^{12}$ | -0.0038802889 |

Additionally, a distance X from a tangential plane of an aspheric vertex of a coordinate point on an aspheric surface having a height Y of the optical axis is represented by the following equation, assuming that a curvature (1/r) of the aspheric vertex is C, a conic coefficient (conic constant) is K, and 4-dimensional to 12-dimensional aspheric coefficients are A4 to A12.

$$X = CY^2/[1 + \sqrt{\{1 - (1+K)C^2Y^2\}}] + A4Y^4 + A6Y^6$$

$$+ A8Y^8 + A10Y^{10} + A12Y^{12}$$

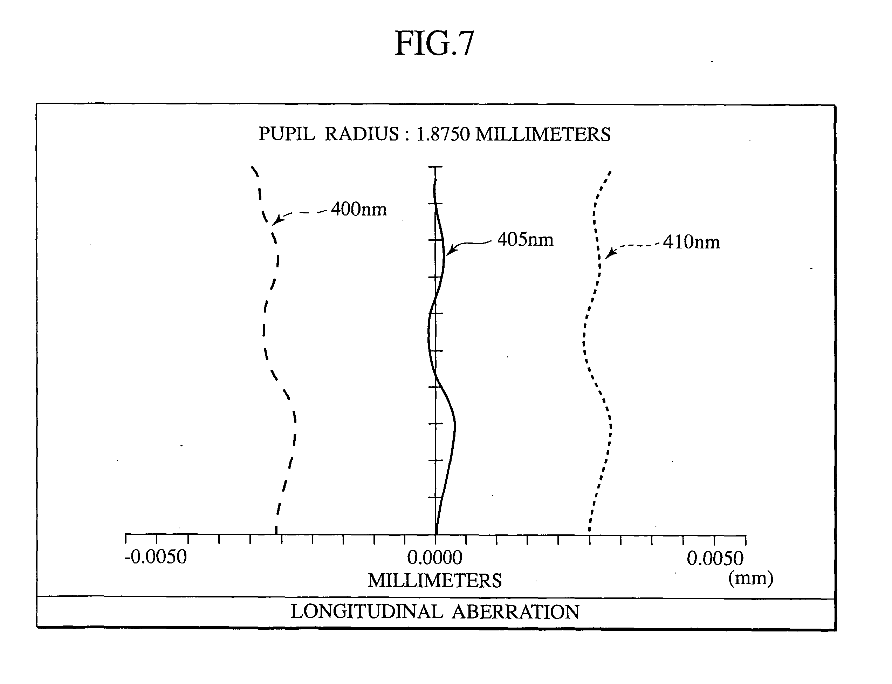

FIG.7 is a longitudinal aberration diagram in three wavelengths of 400 nm, 405 nm, 410 nm in the objective lens 31 of the second embodiment.

The best image surface aberration (rms) of the objective lens 31 is shown in Table 6.

Table 6:

| Best image surface chromatic aberration characteristics | |
| --- | --- |
| 400 nm | 0.013 $\lambda$ (rms) |
| 405 nm | 0.006 $\lambda$ (rms) |
| 410 nm | 0.014 $\lambda$ (rms) |

Therefore, according to the second embodiment, the optical-disk objective lens 31 superior in the best image surface chromatic aberration characteristic can be realized.

Moreover, in the objective lens 31, when a face-to-face eccentricity is 5 $\mu$m, the aberration is 0.025 $\lambda$ (rms). Furthermore, the operation distance is 0.60 mm in the objective lens 31.

<Third Embodiment>

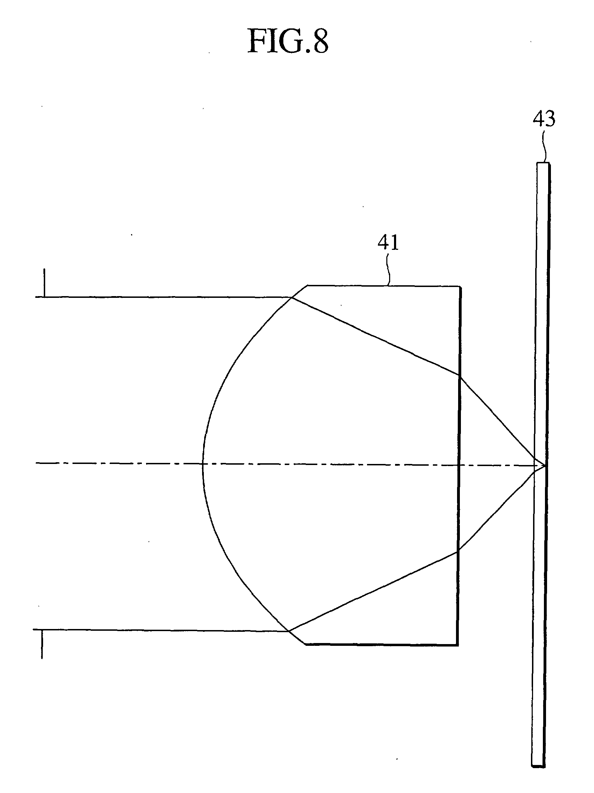

FIG.8 shows an optical-disk objective lens 41 according to a third embodiment of the present invention and an optical disk 43 for use together with the objective lens 41.

The lens specifications of the optical-disk objective lens 41 of the third embodiment are shown in Table 7.

Table 7:

| Specifications on lens | |
| --- | --- |
| Designed wavelength | 405 nm |
| NA | 0.75 |
| Focal distance | 1.5 mm |
| Entrance pupil diameter | 2.25 mm |

Moreover, the lens designed values of the objective lens 41 are shown in Table 8.

Table 8:

| Designed values of lens | | | | | |
| --- | --- | --- | --- | --- | --- |
| Surface number | Surface shape | Radius | Thickness | Glass | Conic constant |
| 1 | Aspheric surface | 1.186043 | 1.7 | NBF1 | -0.2942041 |
| 2 | Aspheric surface | -15.83456 | 0.497105 | | -4974.452 |
| 3 | | Infinity | 0.1 | POLYCARB | |
| 4 | | Infinity | 0.01 | ACRYLIC | |
| Image surface | | | | | |

Here, the third and fourth surfaces indicate the designed values of the optical disk 43.

Moreover, the refractive index of each glass of Table 8 is shown in Table 3.

Furthermore, the aspheric coefficients of the first and second surfaces of the objective lens 41 are shown in Tables 9 and 10.

Table 9:

| Aspheric surface coefficient First surface | |
| --- | --- |
| Coefficient A4 of $r^4$ | -0.0081068112 |
| Coefficient A6 of $r^6$ | -0.0068562912 |
| Coefficient A8 of $r^8$ | -0.0045819339 |

Table 9:   (continued)

| Aspheric surface coefficient First surface | |
| --- | --- |
| Coefficient A10 of $r^{10}$ | 0.0022623792 |
| Coefficient A12 of $r^{12}$ | -0.0043029508 |

Table 10:

| Aspheric surface coefficient Second surface | |
| --- | --- |
| Coefficient A4 of $r^4$ | 0.13708296 |
| Coefficient A6 of $r^6$ | -0.36149219 |
| Coefficient A8 of $r^8$ | 0.1145607 |
| Coefficient A10 of $r^{10}$ | 0.70178705 |
| Coefficient A12 of $r^{12}$ | -0.72328397 |

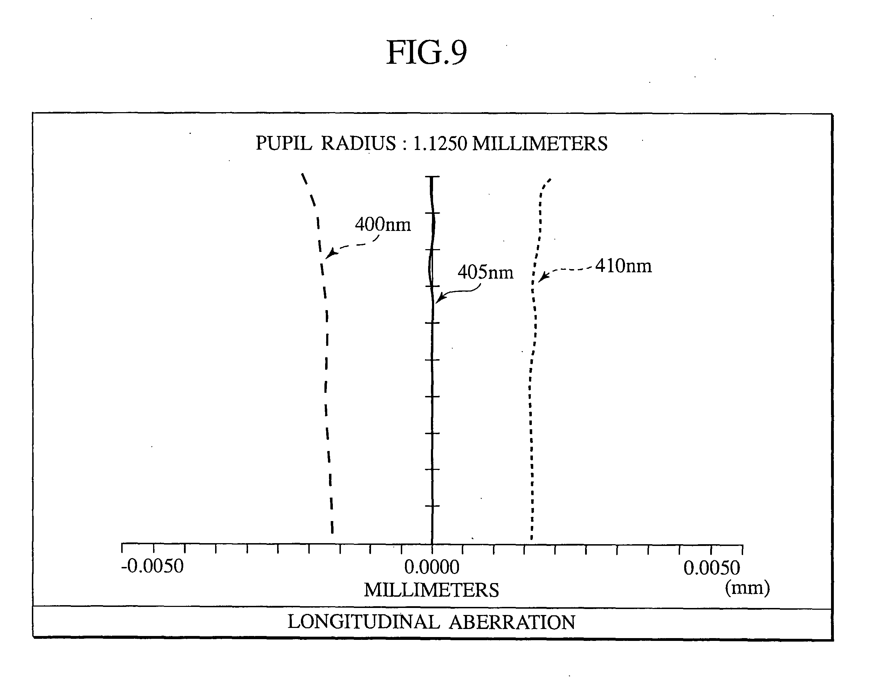

FIG.9 is a longitudinal aberration diagram in three wavelengths of 400 nm, 405 nm, 410 nm in the objective lens of the third embodiment.

The best image surface aberration (rms) of the objective lens 41 is shown in Table 11.

Table 11:

| Best image surface chromatic aberration characteristics | |
| --- | --- |
| 400 nm | 0.009 $\lambda$ (rms) |
| 405 nm | 0.001 $\lambda$ (rms) |
| 410 nm | 0.009 $\lambda$ (rms) |

Therefore, according to the third embodiment, the optical-disk objective lens 41 superior in the best image surface chromatic aberration characteristic can be realized.

Moreover, in the objective lens 41, when the face-to-face eccentricity is 5 $\mu$m, the aberration is 0.027 $\lambda$ (rms). Furthermore, the operation distance is 0.50 mm in the objective lens 41.

<Fourth Embodiment>

A fourth embodiment of the present invention has been developed based on the following consideration.

That is, to improve the axial aberration, the lens may be designed, for example, so as to correct the spherical aberration. Moreover, to improve the out-of-axis aberration, the lens may be designed, for example, so as to satisfy an Abbe's sine condition. Furthermore, the bi-aspherical single lens (the single lens with two aspheric surfaces) can simultaneously satisfy these two conditions. That is, when incidence and emission surfaces are formed into an aspheric lens, the lens simultaneously satisfying the two conditions can be designed.

However, with an numerical aperture of 0.6 or more, it is difficult to secure an eccentricity tolerance in this lens. That is, when the eccentricity tolerance is considered, the axial aberration or the out-of-axis aberration is deteriorated as compared with the out-of-axis aberration or the axial aberration without the eccentricity tolerance considered therein.

Therefore, in order to secure a large eccentricity tolerance, an aspheric lens shape is necessary in which each aberration does not largely increase even with the incidence and emission surfaces having the eccentricity. In other words, it is necessary to design a well-balanced objective lens in which the eccentricity tolerance can be secured by appropriately deteriorating the axial and out-of-axis aberrations.

The objective lens according to the aforementioned consideration is a single lens having at least one surface formed in an aspheric shape and having a numerical aperture of 0.7 to 0.8 and an operation distance of 0.2 mm or more, and is the objective lens for the optical disk, which satisfies the following conditions:

$$(1) \qquad 0.85 < d_1/f < 1.5;$$

$$(2) \qquad 0 > d_1/R2 > -0.7;$$

and

$$(3) \qquad n > 1.6.$$

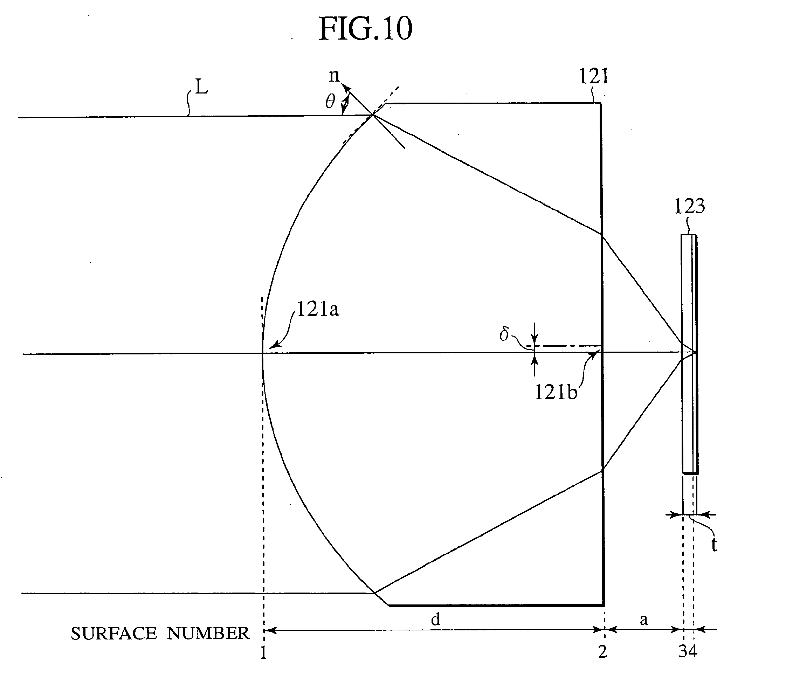

Here, **f** denotes a focal distance of the objective lens, and $d_1$ denotes a center thickness of an objective lens 121 (see FIG.10). Moreover, as shown in FIG.10, R2 denotes a curvature radius in a vertex 121b of the objective lens 121 on a side of an optical disk 123. Additionally, R1 denotes a curvature radius in a vertex 121a of the objective lens 121 on a light source side.

The objective lens 121 can simultaneously satisfy the axial aberration characteristic, out-of-axis aberration characteristic, and eccentricity tolerance (resulting in suppression of aberration increase).

In further detail, the axial aberration (wavefront aberration) can be set to 0.01 λ or less, and the out-of-axis aberration (wavefront aberration) can be set to 0.05 λ or less with respect to the incident light of 0.5 degree. Moreover, for the eccentricity tolerance δ (FIG.10), the wavefront aberration can be set to 0.03 λ or less with respect to the eccentricity of 5 μm. Additionally, these aberrations can further be reduced in accordance with the focal distance.

Moreover, as described later, an operation distance of 0.2 mm or more, preferably 0.4 mm or more can be secured, for example, with respect to thickness t=0.1 mm of a disk reading layer.

Further details will be described hereinafter.

When $0.85 < d_1/f$ in the condition (1) is satisfied, particularly the eccentricity tolerance can be secured while suppressing the axial and out-of-axis aberrations. This is because a radius of the first surface (incidence surface) of the lens can be set to be relatively large with a larger core thickness of the lens. In more detail, when the curvature radius of the first surface increases, an incidence angle θ (angle formed by a normal n of the lens surface and the light beam) of a light beam L (FIG.10) passing through an outer end of the lens upon the objective lens 121 is reduced. This reduces an effect of refraction as a nonlinear phenomenon.

Moreover, when $d_1/f < 1.5$ in the condition (1) is satisfied, the out-of-axis aberration characteristic can effectively be held. In further detail, when $d_1$ is relatively small, the operation distance can be secured even with a relatively large R2. Therefore, the sine condition can relatively easily be satisfied, and the out-of-axis aberration can also be suppressed.

Furthermore, by the condition (1), the lens can be miniaturized and lightened, and a high-speed operation by an actuator can be assured in focus servo and tracking servo operations. Additionally, miniaturization of a pickup can be assured.

Moreover, when the condition (2) $0 > d_1/R2 > -0.7$ is satisfied, a violation amount of the sine condition is suppressed, the out-of-axis aberration characteristic is prevented from being deteriorated, and the operation distance can be secured.

Further details will be described hereinafter.

A negative value of $d_1/R2$ means that R2 is negative, and this means that the objective lens 121 is a double convex lens. This can enlarge the eccentricity tolerance (refer to the following description of condition (4)).

Moreover, a power of the convex lens can thereby be shared by R1 and R2, R1 can be set to be relatively large as a result, and an operation distance **a** (FIG.10) can be lengthened. This is because the operation distance **a** can be represented by a = f - f/R1 · d(n-1)/n with the single lens. Furthermore, the equation represents the operation distance in air, but the distance does not essentially change even when the light is focused on the disk.

Furthermore, when d/R2 is set to be larger than -0.7, estrangement from a complete aplanat form is reduced, the out-of-axis aberration is therefore reduced/suppressed, and the aberrations can be balanced.

When the condition (3) n > 1.6 is satisfied, a large numerical aperture can easily be achieved in a relatively shallow spherical surface easy to be processed (spherical surface having a small angle θ (FIG.10) formed by the normal direction of the lens surface and the optical axis in an outermost periphery of the lens).

Additionally, a refractive index **n** is more preferably 1.7 or more. Thereby, a necessary numerical aperture can be realized in the objective lens which has a shallower spherical surface.

The objective lens 121 of the fourth embodiment further preferably satisfies condition:

$$(4) \qquad 0.65 < R1/f < 0.9.$$

This facilitates correction of the sine condition, and can inhibit the out-of-axis aberration from being deteriorated.

In further detail, when R1/f is set to be smaller than 0.9, the violation amount of the sine condition is suppressed, and the out-of-axis aberration can be held to be satisfactory.

Further details will be described hereinafter.

As described above, it is necessary to suppress the axial and out-of-axis aberrations while securing the eccentricity tolerance. In this case, it is preferable to set the value of curvature radius R1 of the first surface to be large and to form the double convex lens. Here, when the focal distance is constant, and R1 is set to the aforementioned range, the value of R2 can be held to be relatively small, the violation amount of the sine condition can easily be suppressed as a result, and the out-of-axis aberration can be held to be satisfactory. For example, with the lens having a focal distance of 2 mm, when the condition is satisfied, the out-of-axis aberration (wavefront aberration) can be suppressed to 0.07 λ or less with respect to the incident light having an incidence angle of 0.5 degree.

Moreover, when R1/f is set to be larger than 0.65, a large operation distance **a** (FIG.10) of the objective lens 121 with respect to the optical disk 123 can be secured.

In further detail, with general use of the single lens, the operation distance **a** of the optical pickup is represented as follows, assuming that the optical disk 123 has a thickness **t** and refractive index N.

$$a = f - (f/R1)d(n-1)/n - t/N$$

Here, **n** denotes the refractive index of the objective lens 121. Therefore, when R1/f is set to be large as described above, the large operation distance can be secured. For example, it is possible to secure an operation distance of 0.2 mm or more, preferably 0.4 mm or more with respect to the reading layer of the disk 123 of t=0.1. Moreover, for example, with n=1.75, f=2mm, d=2.6 mm, t=0.1 mm, N=1.6 (when R1/f is larger than 0.65), an operation distance of 0.22 mm or more can be secured.

Furthermore, the lens of the present embodiment more preferably satisfies condition:

$$(5) \qquad |R1/R2| < 0.6$$

Thereby, the spherical aberration (wavefront aberration) can be reduced/suppressed as described above.

In further detail, a combination of radii for minimizing the spherical aberration is known in the bi-aspherical single lens, and the objective lens 121 is called a best form lens. When R1 and R2 are set to satisfy the condition, the estrangement from the best form lens is reduced, and the spherical aberration can be reduced.

In the optical-disk objective lens 121 of the fourth embodiment, |R1/R2| < 0.3 is further preferable.

Thereby, the spherical aberration can further easily be corrected, and a balance among the axial and out-of-axis aberrations and eccentricity tolerance can be kept to be satisfactory.

Furthermore, the focal distance is preferably set to 2.2 mm or less in the objective lens 121 of the fourth embodiment.

The optical pickup can thereby be miniaturized. As described above, the small-sized pickup can be used, for example, in a drive for recording data in a mobile application.

Moreover, the objective lens 121 of the fourth embodiment is preferably used together with the optical disk 121 having a 0.3 mm or thinner transmission layer.

This can easily handle decrease of a system allowance.

Examples of the fourth embodiment will be described hereinafter.

<Example 4-1>

The specifications of the objective lens 121 are shown in Table 12.

Table 12:

| Specifications on lens | |
|---|---|
| Designed wavelength | 405 nm |
| NA | 0.75 |
| Focal distance | 2.0 mm |
| Entrance pupil diameter | 3 mm |

Moreover, the designed values of the objective lens 121 are shown in Table 13.

Table 13:

| Designed values of lens | | | | | |
|---|---|---|---|---|---|
| Surface number | Surface shape | Radius | Thickness | Glass (Refractive index) | Conic constant |
| 1 | Aspheric surface | 1.5711 | 2.2 | NBF1 (1.76898499) | -0.55559 |
| 2 | Aspheric surface | -28.5721 | 0.72 | - | 126.4458 |
| 3 | - | Infinity | 0.09 | POLYCARB (1.62230752) | - |
| 4 | - | Infinity | 0.01 | ACRYLIC (1.50650420) | - |
| Image surface | - | - | - | - | - |

Here, the third and fourth surfaces indicate respective surfaces of the transmission layer of the optical disk 123 (see FIG.10). Moreover, a unit of radius or thickness is mm.

Moreover, aspheric coefficients of the first and second surfaces are shown in Tables 14, 15.

Table 14:

| Aspheric surface coefficient First surface | |
|---|---|
| Coefficient A4 of $r^4$ | 0.0042467 |
| Coefficient A6 of $r^6$ | -0.00083941 |
| Coefficient A8 of $r^8$ | 0.0013892 |
| Coefficient A10 of $r^{10}$ | -0.00092572 |
| Coefficient A12 of $r^{12}$ | 0.00013133 |

Table 15:

| Aspheric surface coefficient Second surface | |
|---|---|
| Coefficient A4 of $r^4$ | 0.073942 |
| Coefficient A6 of $r^6$ | -0.14198 |
| Coefficient A8 of $r^8$ | 0.12620 |
| Coefficient A10 of $r^{10}$ | -0.042768 |

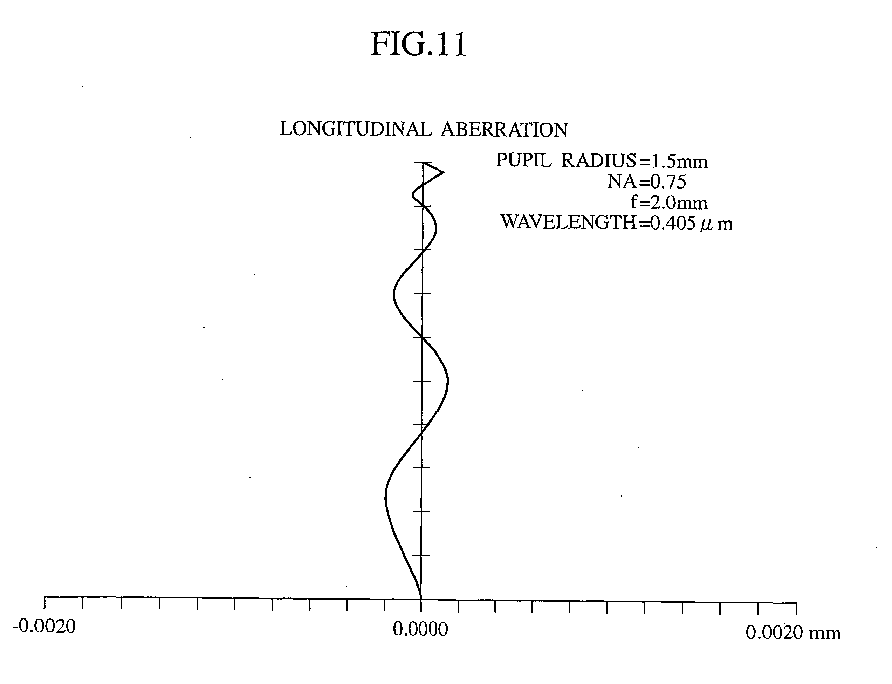

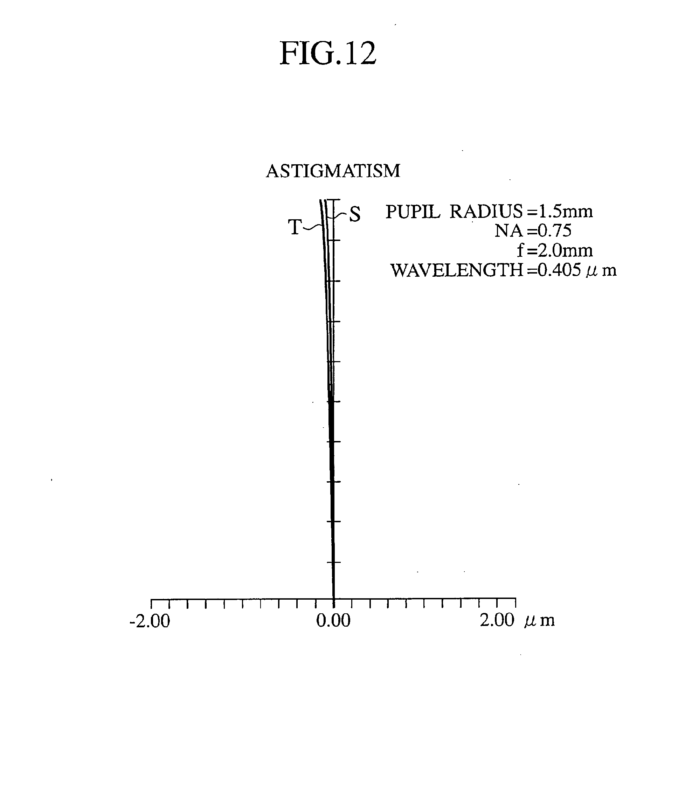

FIG.11 is a longitudinal aberration diagram of Example 4-1, and FIG.12 is an astigmatism diagram.

According to the objective lens 121 of Example 4-1, the wavefront aberration on the axis is small as 0.006 $\lambda$, and it can be said that there is practically no aberration. Moreover, the wavefront aberration is 0.41 $\lambda$ with respect to the out-of-axis incident light beam having an incidence angle of 0.5 degree with respect to the optical axis, and this similarly indicates a satisfactory characteristic. Furthermore, for the face-to-face eccentricity, when the eccentricity amount is 5 $\mu$m, the wavefront aberration is 0.016 $\lambda$, and a slight increase of aberration is seen, but there is no practical problem. That is, the objective lens 121 has a manufacturing tolerance which can sufficiently bear mass production. Moreover, the operation distance is 0.72 mm, and this is a sufficiently large value.

<Example 4-2>

The specifications of the objective lens 121 are shown in Table 16.

Table 16:

| Specifications on lens | |
|---|---|
| Designed wavelength | 405 nm |
| NA | 0.78 |

Table 16:   (continued)

| Specifications on lens | |
| --- | --- |
| Focal distance | 1.5 mm |
| Entrance pupil diameter | 2.34 mm |

Moreover, the designed values of the objective lens 121 are shown in Table 17.

Table 17:

| Designed values of lens | | | | | |
| --- | --- | --- | --- | --- | --- |
| Surface number | Surface shape | Radius | Thickness | Glass (Refractive index) | Conic constant |
| 1 | Aspheric surface | 1.1879 | 1.70 | NBF1 (1.76898499) | -0.61429 |
| 2 | Aspheric surface | -15.0620 | 0.5 | - | -14462.3 |
| 3 | - | Infinity | 0.09 | POLYCARB (1.62230752) | - |
| 4 | - | Infinity | 0.01 | ACRYLIC (1.50650420) | - |
| Image surface | - | - | - | - | - |

Here, the third and fourth surfaces indicate the respective surfaces of the transmission layer of the optical disk 123 (see FIG.10). Moreover, the unit of radius or thickness is mm.

Moreover, the aspheric coefficients of the first and second surfaces are shown in Tables 18, 19.

Table 18:

| Aspheric surface coefficient First surface | |
| --- | --- |
| Coefficient A4 of $r^4$ | 0.019672 |
| Coefficient A6 of $r^6$ | -0.011380 |
| Coefficient A8 of $r^8$ | 0.016411 |
| Coefficient A10 of $r^{10}$ | -0.012055 |
| Coefficient A12 of $r^{12}$ | 0.0024613 |

Table 19:

| Aspheric surface coefficient Second surface | |
| --- | --- |
| Coefficient A4 of $r^4$ | 0.048253 |
| Coefficient A6 of $r^6$ | -0.20958 |
| Coefficient A8 of $r^8$ | 0.34101 |
| Coefficient A10 of $r^{10}$ | -0.19998 |

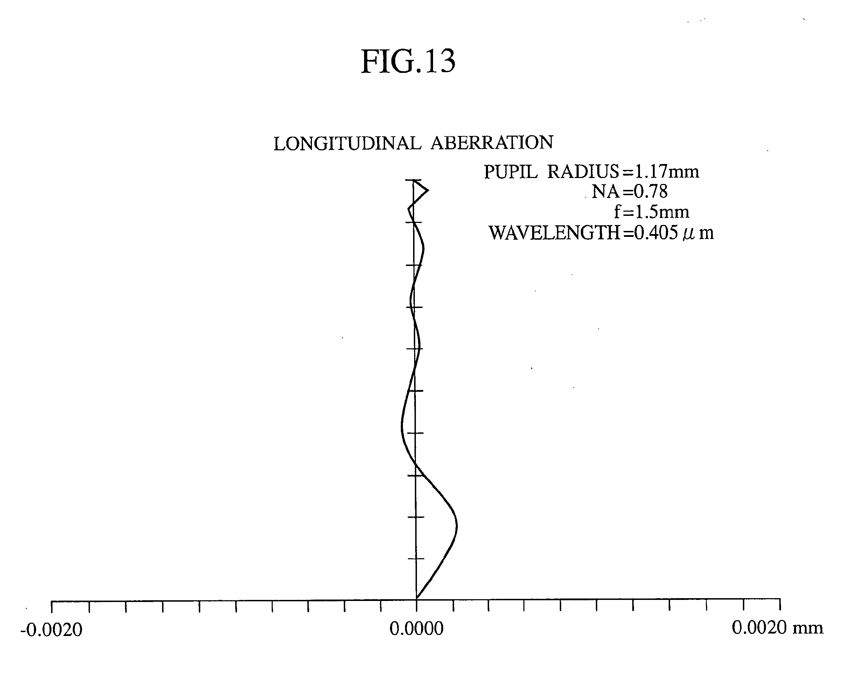

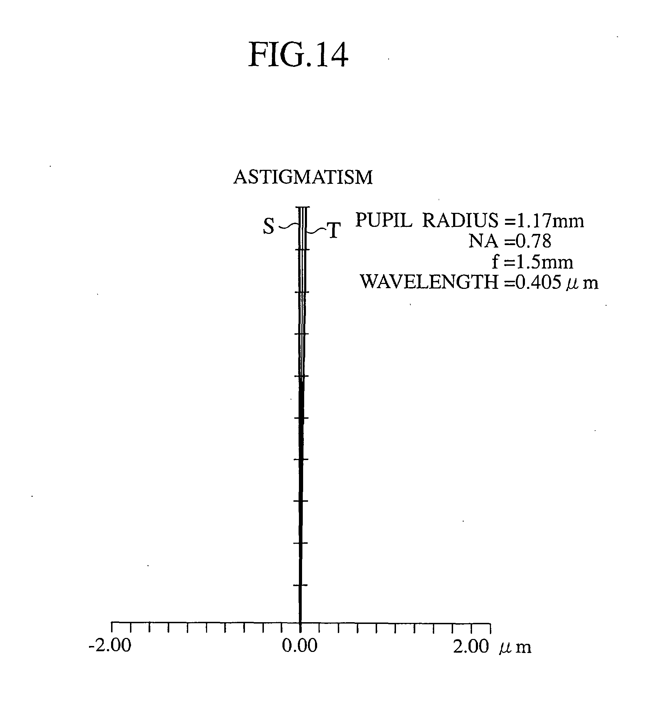

FIG. 13 is a longitudinal aberration diagram of Example 4-2, and FIG.14 is an astigmatism diagram.

According to the objective lens 121 of Example 4-2, the axial wavefront aberration is 0.003 λ, and it can be said that there is substantially no aberration. Moreover, the out-of-axis wavefront aberration is 0.045 λ with respect to the out-of-axis incident light beam having the incidence angle of 0.5 degree, and this indicates a practically satisfactory characteristic.

Furthermore, for the face-to-face eccentricity amount (eccentricity tolerance), when the eccentricity amount is 5 μm, the wavefront aberration is 0.012 λ. Therefore, this objective lens also has a manufacturing tolerance which can bear mass production. Moreover, the operation distance of the objective lens 121 is 0.5 mm, and the lens has a practically sufficient broad value.

<Fifth Embodiment>

A fifth embodiment of the present invention has been developed based on the following consideration.

That is, to improve the axial aberration, the lens may be designed, for example, so as to correct the spherical aberration. Moreover, to improve the out-of-axis aberration, the lens may be designed, for example, so as to satisfy the Abbe's sine condition. Furthermore, the bi-aspherical single lens (the single lens with two aspheric surfaces) can simultaneously satisfy these two conditions. That is, when the incidence and emission surfaces are formed into the aspheric lens, the lens simultaneously satisfying the two conditions can be designed.

However, with the numerical aperture of 0.6 or more, it is difficult to secure the eccentricity tolerance in this lens. That is, when the eccentricity tolerance is considered, the axial aberration or the out-of-axis aberration is deteriorated as compared with the out-of-axis aberration or the axial aberration without the eccentricity tolerance considered therein.

Therefore, in order to secure the large eccentricity tolerance, the aspheric lens shape is necessary in which each aberration does not largely increase even with the incidence and emission surfaces having the eccentricity. In other words, it is necessary to design the well-balanced objective lens in which the eccentricity tolerance can be secured by appropriately deteriorating the axial and out-of-axis aberrations.

The objective lens according to the aforementioned consideration is a single lens having at least one of a light source side surface and optical disk side surface formed in an aspheric shape and having a numerical aperture of 0.78 or more, and the lens satisfies the following conditions:

$$(1) \qquad d_1/f > 1.2;$$

$$(2) \qquad 0.65 < R1/f < 0.95;$$

$$(3) \qquad |R1/R2| < 0.7;$$

and

$$(4) \qquad n > 1.65.$$

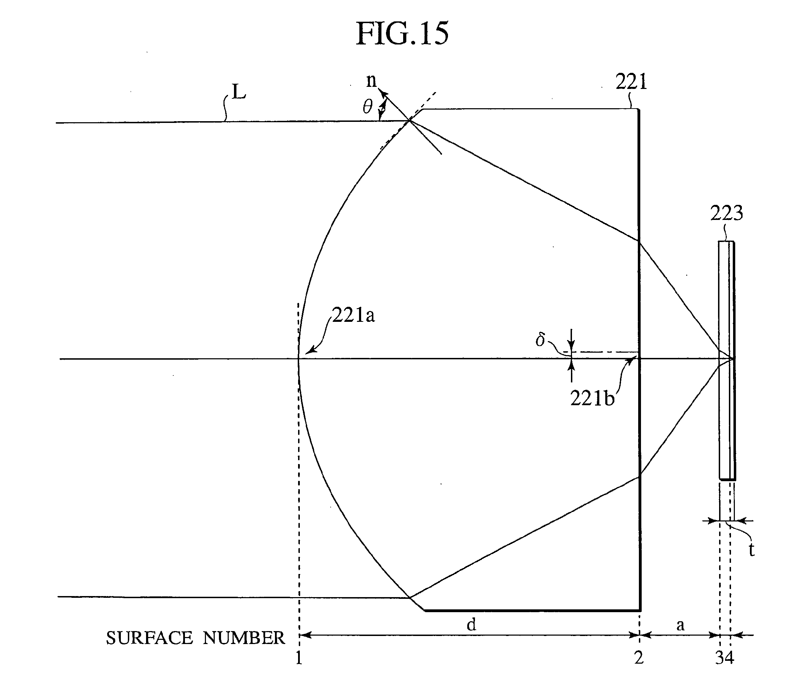

Here, **f** denotes the focal distance of the objective lens, and $d_1$ denotes the center thickness of an objective lens 221 (FIG.15). Moreover, as shown in FIG.15, R1 denotes a curvature radius in a vertex 221a of the objective lens 221 on the light source side, and R2 denotes a curvature radius in a vertex 221b of the objective lens 221 on the side of an optical disk 223.

The objective lens 221 can simultaneously satisfy the axial aberration characteristic, out-of-axis aberration characteristic, and eccentricity tolerance (resulting in the suppression of aberration increase).

In further detail, the axial aberration (wavefront aberration) can roughly be set to 0.015 λ or less, and the out-of-axis aberration (wavefront aberration) can be set to 0.1 λ or less with respect to the incident light of 0.5 degree. Moreover, for the eccentricity tolerance, the wavefront aberration can be set to 0.04 λ or less with respect to the eccentricity δ of 5 μm (FIG.15).

Moreover, as described later, the operation distance of at least 0.2 mm or more, preferably 0.4 mm or more can be secured, for example, with respect to the thickness t = 0.1 mm of the disk reading layer.

Further details will be described hereinafter.

According to the lens which satisfies the condition (1) ($d_1/f > 1.2$), particularly the eccentricity tolerance can be secured while suppressing the axial and out-of-axis aberrations. This is because the radius of the first surface (incidence surface) of the lens can be set to be relatively large with a larger core thickness of the lens. In more detail, when the curvature radius of the first surface increases, the incidence angle θ (angle formed by the normal **n** of the lens surface and the light beam) of the light beam L (FIG.15) passing through the outer end of the lens upon the objective lens 221 is reduced. This reduces an effect of refraction as the nonlinear phenomenon.

Moreover, d/f is preferably 1.5 or less.

Thereby, the out-of-axis aberration characteristic can be held to be satisfactory. In further detail, when $d_1$ is relatively small, the operation distance can be secured even with a relatively large R2. Therefore, the sine condition can relatively easily be satisfied, and the out-of-axis aberration can also be suppressed.

Furthermore, according to the lens which satisfies the condition (2) (0.65 < R1/f < 0.95), particularly the sine condition can easily be corrected, and the out-of-axis aberration can be inhibited from being deteriorated.

In further detail, when R1/f is set to 0.95 or less, the violation amount of the sine condition is suppressed, and the out-of-axis aberration can be held to be satisfactory.

Further details will be described hereinafter.

As described above, it is necessary to suppress the axial and out-of-axis aberrations while securing the eccentricity tolerance. In this case, it is preferable to set the value of the curvature radius R1 of the first surface to be large and to form the double convex lens. Here, when the focal distance is constant, and R1 is set to the aforementioned range, the value of R2 can also be held to be relatively small, the violation amount of the sine condition can easily be suppressed as a result, and the out-of-axis aberration can be held to be satisfactory. For example, with the lens having the focal distance of 2 mm, when the condition is satisfied, the out-of-axis aberration (wavefront aberration) can be suppressed to $0.07 \lambda$ or less with respect to the incident light having the incidence angle of 0.5 degree.

Moreover, when R1/f is set to be larger than 0.65, the large operation distance a (FIG.15) of the objective lens 221 with respect to the optical disk 223 can be secured.

In further detail, with general use of the single lens, the operation distance **a** of the optical pickup is represented as follows, assuming that the optical disk 223 has the thickness t and refractive index N.

$$a = f - (f/R1)d_1(n-1)/n - t/N$$

Here, **n** denotes the refractive index of the objective lens 221. Therefore, when R1/f is set to be large as described above, the large operation distance can be secured. For example, it is possible to secure the operation distance of 0.2 mm or more, preferably 0.4 mm or more with respect to the reading layer of the disk 223 of t=0.1. Moreover, for example, with n=1.75, f=2mm, $d_1$=2.6 mm, t=0.1 mm, N=1.6 (when R1/f is larger than 0.65), the operation distance of 0.22 mm or more can be secured.

Furthermore, according to the objective lens 221 which satisfies the condition (3) (|R1/R2| < 0.7), the spherical aberration (wavefront aberration) can be reduced/suppressed as described above.

In further detail, the combination of radii for minimizing the spherical aberration is known in the bi-spherical single lens, and this lens is called the best form lens. When R1 and R2 are set to satisfy the condition, the estrangement from the best form lens is reduced, and the spherical aberration can be reduced.

In the optical-disk objective lens 221 of the fifth embodiment, |R1/R2| < 0.3 is further preferable.

Thereby, the spherical aberration can further easily be corrected, and the balance among the axial and out-of-axis aberrations and eccentricity tolerance can be kept to be satisfactory.

Furthermore, when the condition (4) n > 1.65 is satisfied, a large numerical aperture (e.g., 0.78 or more) can easily be realized in a relatively shallow spherical surface easy to be processed (spherical surface having a small angle $\theta$ (FIG.15) formed by the normal direction of the lens surface and the optical axis in the outermost periphery of the lens).

In further detail, when the condition (4) is satisfied, it is possible to simultaneously satisfy (i) the aberration characteristic of the out-of-axis light beam and (ii) the suppression of increase of aberration with the face-to-face eccentricity. In a qualitative manner, when the refractive index is in the range of the condition (4), the incidence angle around the first surface of the lens is small, and an influence in the second surface is small even with the eccentricity. Therefore, it is possible to simultaneously satisfy ( i ) the aberration characteristic of the out-of-axis light beam and ( ii ) the suppression of increase of aberration with the face-to-face eccentricity.

Additionally, the refractive index **n** is more preferably 1.7 or more. Thereby, the necessary numerical aperture can be realized in the objective lens which has a shallower spherical surface.

The objective lens 221 of the fifth embodiment further preferably satisfies the following condition (5).

$$(5) \qquad -0.6 < d/R2 < 0$$

Thereby, the axial and out-of-axis aberrations can be reduced/suppressed as described above, and the eccentricity tolerance can be secured as described above.

Further details will be described hereinafter.

A negative value of d/R2 means that R2 is negative, and this means that the objective lens is a double convex lens. This can enlarge the eccentricity tolerance as described in the description of the condition (2). Moreover, when d/R2 is set to be larger than -0.6, the estrangement from the complete aplanat form is reduced, the out-of-axis aberration is reduced/suppressed, and the aberrations can be balanced.

Additionally, the value of d/R2 is more preferably -0.5 or more.

In this case, further satisfactory axial aberration characteristic, out-of-axis aberration characteristic and eccentricity tolerance characteristic can be realized.

Examples of the fifth embodiment will be described hereinafter.

<Example 5-1>

The specifications of the objective lens 221 are shown in Table 20.

Table 20:

| Specifications on lens | |
|---|---|
| Designed wavelength | 405 nm |
| NA | 0.8 |
| Focal distance | 2.5 mm |
| Entrance pupil diameter | 4 mm |

Moreover, the designed values of the objective lens 221 are shown in Table 21.

Table 21:

| Designed values of lens | | | | | |
|---|---|---|---|---|---|
| Surface number | Surface shape | Radius | Thickness | Glass (Refractive index) | Conic constant |
| 1 | Aspheric surface | 2.0094 | 3.20 | NBF1 (1.76898499) | -0.33260 |
| 2 | Aspheric surface | -13.6662 | 0.71 | - | 28.24710 |
| 3 | - | Infinity | 0.09 | POLYCARB (1.62230752) | - |
| 4 | - | Infinity | 0.01 | ACRYLIC (1.50650420) | - |
| Image surface | - | - | - | - | - |

Here, the third and fourth surfaces indicate the respective surfaces of the transmission layer of the optical disk 223 (see FIG.15). Moreover, the unit of radius or thickness is mm.
Moreover, the aspheric coefficients of the first and second surfaces are as shown in Tables 22, 23.

Table 22:

| Aspheric surface coefficient First surface | |
|---|---|
| Coefficient A4 of $r^4$ | -0.0012822 |
| Coefficient A6 of $r^6$ | -0.00045473 |
| Coefficient A8 of $r^8$ | 4.0381e-6 |
| Coefficient A10 of $r^{10}$ | -1.1631e-5 |
| Coefficient A12 of $r^{12}$ | -7.8205e-6 |

Here, for example, e-6 means $10^{-6}$.

Table 23:

| Aspheric surface coefficient Second surface | |
|---|---|
| Coefficient A4 of $r^4$ | 0.085102 |
| Coefficient A6 of $r^6$ | -0.11178 |
| Coefficient A8 of $r^8$ | 0.071686 |
| Coefficient A10 of $r^{10}$ | -0.017766 |

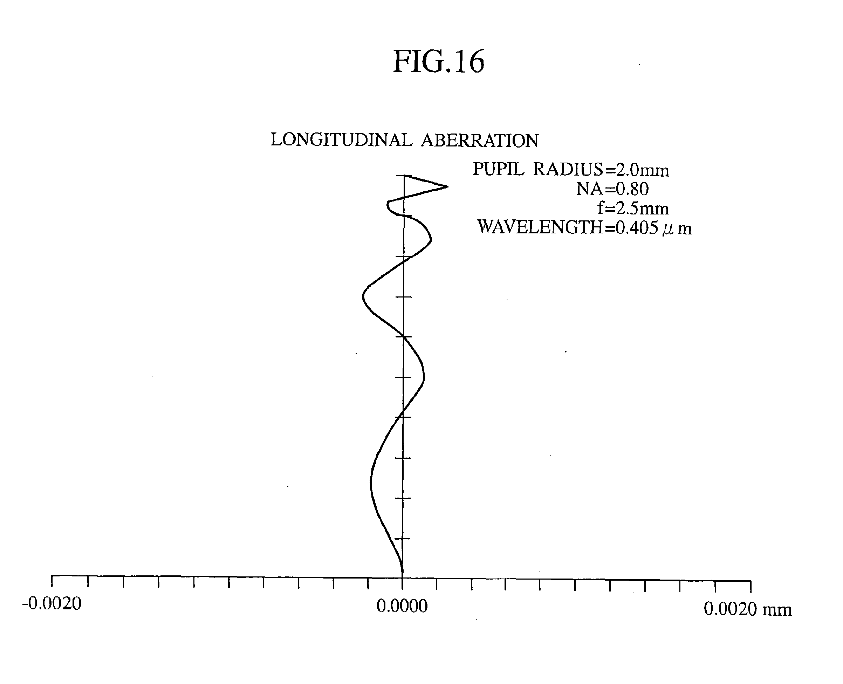

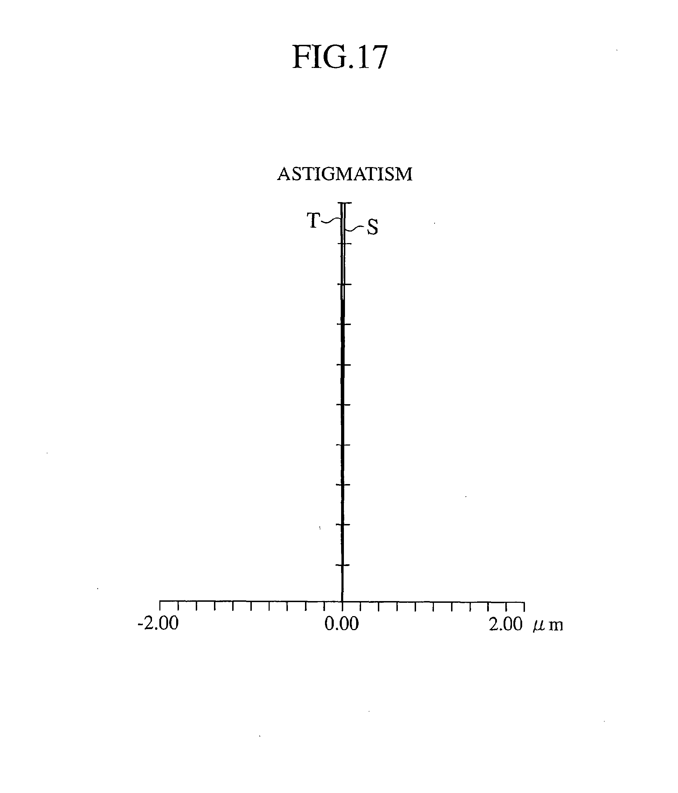

FIG. 16 is a longitudinal aberration diagram of Example 5-1, and FIG.17 is an astigmatism diagram.
According to the objective lens 221 of Example 5-1, the wavefront aberration on the axis is small as 0.01 λ, and it can be said that there is practically no aberration. Moreover, the wavefront aberration is 0.056 λ with respect to the out-of-axis incident light beam having the incidence angle of 0.5 degree with respect to the optical axis, and this similarly indicates the satisfactory characteristic. Furthermore, for the face-to-face eccentricity, when the eccentricity amount is 5 μm, the wavefront aberration is 0.030 λ, and a slight increase of aberration is seen, but there is no practical problem. That is, the objective lens 221 has a manufacturing tolerance which can sufficiently bear the mass production. Moreover, the operation distance is 0.71 mm, and this is a sufficiently large value.

<Example 5-2>

The specifications of the objective lens are shown in Table 24.

| Table 24: Specifications on lens | |
|---|---|
| Designed wavelength | 405 nm |
| NA | 0.85 |
| Focal distance | 2.20 mm |
| Entrance pupil diameter | 3.74 mm |

Moreover, the designed values of the objective lens 221 are shown in Table 25.

| Table 25: Designed values of lens | | | | | |
|---|---|---|---|---|---|
| Surface number | Surface shape | Radius | Thickness | Glass (Refractive index) | Conic constant |
| 1 | Aspheric surface | 1.8121 | 3.10 | NBF1 (1.76898499) | -0.33718 |
| 2 | Aspheric surface | -6.5076 | 0.41 | - | -845.6516 |
| 3 | - | Infinity | 0.09 | POLYCARB (1.62230752) | - |
| 4 | - | Infinity | 0.01 | ACRYLIC (1.50650420) | - |
| Image surface | - | - | - | - | - |

Here, the third and fourth surfaces indicate the respective surfaces of the transmission layer of the optical disk 223 (see FIG.15). Moreover, the unit of radius or thickness is mm.

Moreover, the aspheric coefficients of the first and second surfaces are shown in Tables 26, 27.

Table 26:

| Aspheric surface coefficient First surface | |
|---|---|
| Coefficient A4 of $r^4$ | -0.00092007 |
| Coefficient A6 of $r^6$ | -0.00025707 |
| Coefficient A8 of $r^8$ | -0.00057872 |
| Coefficient A10 of $r^{10}$ | -0.00022228 |
| Coefficient A12 of $r^{12}$ | -5.6788e-5 |

Table 27:

| Aspheric surface coefficient Second surface | |
|---|---|
| Coefficient A4 of $r^4$ | 0.061449 |
| Coefficient A6 of $r^6$ | -0.13996 |
| Coefficient A8 of $r^8$ | 0.12867 |
| Coefficient A10 of $r^{10}$ | -0.043733 |

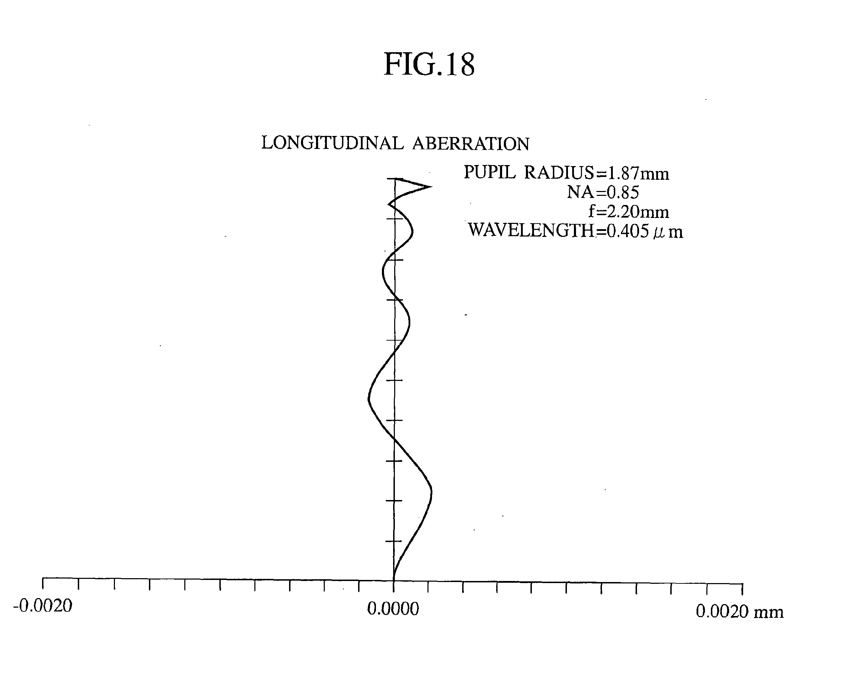

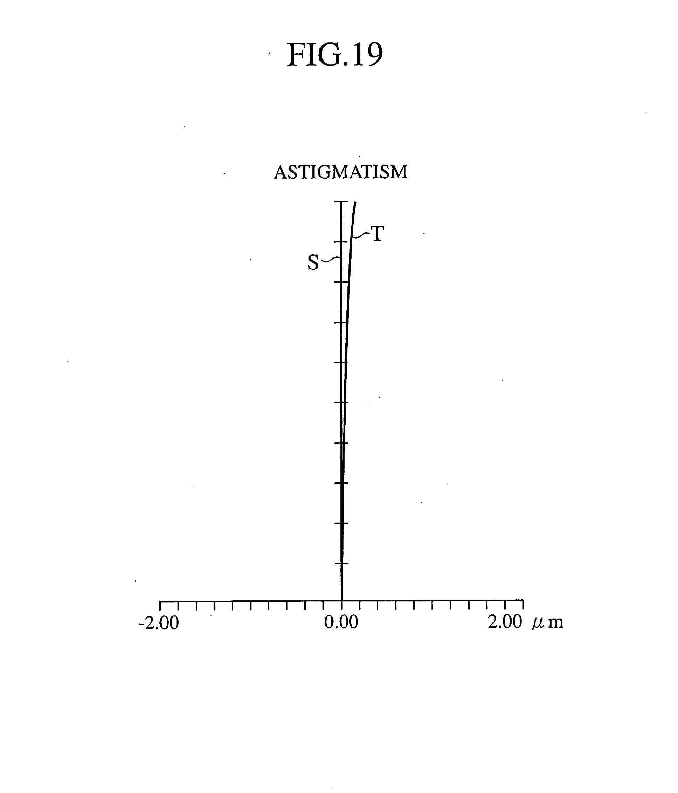

FIG.18 is a longitudinal aberration diagram of Example 5-2, and FIG.19 is an astigmatism diagram.

According to the objective lens 221 of Example 5-2, the axial wavefront aberration is 0.006 λ, and it can be said that there is substantially no aberration. Moreover, the out-of-axis wavefront aberration is 0.007 $\lambda$ with respect to the out-of-axis incident light beam having the incidence angle of 0.5 degree, and this indicates a practically satisfactory characteristic. Additionally, the out-of-axis wavefront aberration is slightly larger than that of Example 5-1. This is because the numerical aperture (0.85) of Example 5-2 is larger than that (0.8) of Example 5-1.

Furthermore, for the face-to-face eccentricity amount (eccentricity tolerance), when the eccentricity amount is 5 $\mu$m, the wavefront aberration is 0.036 $\lambda$. Therefore, this objective lens also has a manufacturing tolerance which can bear mass production. Moreover, the operation distance of the objective lens 221 is 0.41 mm, and the lens has a practically sufficient broad value.

As described above, according to the present invention, the objective lens for the optical disk, superior in the best image surface chromatic aberration characteristic and out-of-axis aberration characteristic, can be realized.

Moreover, according to the present invention, there can be provided the objective lens which is constituted of the single lens having a numerical aperture of 0.7 to 0.8, which can be used in the optical disk having a 0.3 mm or thinner reproducing transmission layer, whose eccentricity tolerance is in a manufacturable range with respect to the light having a wavelength of about 400 nm, and which has satisfactory axial and out-of-axis aberration characteristics and a broad operation distance.

Furthermore, there can be provided the objective lens which is constituted of the single lens having a numerical aperture of 0.78 or more, which can be used in the optical disk having a 0.3 mm or thinner reproducing transmission layer, whose eccentricity tolerance is in a manufacturable range with respect to the light having a wavelength of about 400 nm, and which has satisfactory axial and out-of-axis aberration characteristics and a broad operation distance.

It should be understood that many modifications and adaptations of the invention will become apparent to those skilled in the art and it is intended to encompass such obvious modifications and changes in the scope of the claims appended hereto.

**Claims**

1. An objective lens (21, 31, 41) for an optical disk, comprising a bi-aspherical single lens having a numerical aperture of 0.7 or more, wherein a center thickness of the lens is more than a focal distance.

2. The objective lens (21, 31, 41) for the optical disk according to claim 1 wherein an image forming magnification in a design reference wavelength is 0 times.

3. The objective lens (21, 31, 41) for the optical disk according to claim 1 wherein the design reference wavelength is shorter than 0.45 $\mu$m.

4. The objective lens (21, 31, 41) for the optical disk according to claim 1 wherein the focal distance is shorter than 4.0 mm and longer than **t** represented by the following equation:

$$t = d/n + 0.9 \text{ (mm)},$$

in which **d** denotes a thickness of the optical disk, and **n** denotes a refractive index of the optical disk.

5. An objective lens (121) for an optical disk, comprising a single lens having at least one surface formed in an aspheric shape and having a numerical aperture of 0.7 to 0.8 and an operation distance of 0.2 mm or more, and satisfying the following condition:

$$0.85 < d_1/f < 1.5;$$

$$0 > d_1/R2 > -0.7;$$

and

$$n > 1.6,$$

in which **f** denotes a focal distance of the lens, $d_1$ denotes a center thickness of the lens, R2 denotes a curvature radius in a vertex of the lens on an optical disk side, and **n** denotes a refractive index of the lens.

6.  The objective lens (121) for the optical disk according to claim 5 wherein the focal distance is 2.2 mm or less.

7.  The objective lens (121) for the optical disk according to claim 5 wherein a thickness of a transmission layer of the optical disk is 0.3 mm or less.

8.  An objective lens (221) for an optical disk, comprising a single lens having at least one surface formed in an aspheric shape and having a numerical aperture of 0.78 or more, and satisfying the following condition:

$$d_1/f > 1.2;$$

$$0.65 < R1/f < 0.95;$$

$$|R1/R2| < 0.7;$$

and

$$n > 1.65,$$

in which **f** denotes a focal distance of the lens, $d_1$ denotes a center thickness of the lens, R1 denotes a curvature radius in a vertex of the lens on a light source side, R2 denotes a curvature radius in a vertex of the lens on an optical disk side, and **n** denotes a refractive index of the lens.

9.  The objective lens (221) for the optical disk according to claim 8 wherein the operation distance is 0.3 mm or more.

10. The objective lens (221) for the optical disk according to claim 8 wherein a thickness of a transmission layer of the optical disk is 0.3 mm or less.

# FIG.1

## PRIOR ART

# FIG.2

## PRIOR ART

# FIG.3

# FIG.4

OUT-OF-AXIS ABERRATION (0.5 DEGREE)

ABERRATION ($\lambda$ (rms))

FOCAL DISTANCE

LENS THICKNESS D (mm)

EP 1 209 490 A2

# FIG.5

ABERRATION IN 410 nm

LENS THICKNESS D (mm)

FOCAL DISTANCE

ABERRATION
( λ (rms))

EP 1 209 490 A2

# FIG.6

# FIG.7

PUPIL  RADIUS : 1.8750 MILLIMETERS

— –400nm

405nm

—---410nm

-0.0050                    0.0000                    0.0050
                       MILLIMETERS                    (mm)

LONGITUDINAL ABERRATION

EP 1 209 490 A2

# FIG.8

# FIG.9

PUPIL RADIUS : 1.1250 MILLIMETERS

400nm

405nm   410nm

-0.0050          0.0000          0.0050

MILLIMETERS   (mm)

LONGITUDINAL ABERRATION

EP 1 209 490 A2

# FIG.10

EP 1 209 490 A2

SURFACE NUMBER

# FIG.11

LONGITUDINAL ABERRATION

PUPIL RADIUS=1.5mm
NA=0.75
f=2.0mm
WAVELENGTH=0.405 $\mu$ m

-0.0020          0.0000          0.0020 mm

# FIG.12

ASTIGMATISM

PUPIL RADIUS =1.5mm
NA =0.75
f =2.0mm
WAVELENGTH =0.405 $\mu$ m

-2.00          0.00          2.00 $\mu$ m

# FIG.13

LONGITUDINAL ABERRATION

PUPIL RADIUS=1.17mm
NA=0.78
f=1.5mm
WAVELENGTH=0.405 $\mu$ m

-0.0020          0.0000          0.0020 mm

EP 1 209 490 A2

# FIG.14

ASTIGMATISM

S ╫ T  PUPIL RADIUS =1.17mm
NA =0.78
f =1.5mm
WAVELENGTH =0.405 $\mu$ m

-2.00          0.00          2.00  $\mu$ m

# FIG.15

SURFACE NUMBER

EP 1 209 490 A2

# FIG.16

LONGITUDINAL ABERRATION

PUPIL RADIUS=2.0mm
NA=0.80
f=2.5mm
WAVELENGTH=0.405$\mu$m

-0.0020          0.0000          0.0020 mm

EP 1 209 490 A2

# FIG.17

ASTIGMATISM

-2.00          0.00          2.00 $\mu$m

# FIG.18

LONGITUDINAL ABERRATION

PUPIL RADIUS=1.87mm
NA=0.85
f=2.20mm
WAVELENGTH=0.405 $\mu$ m

-0.0020          0.0000          0.0020 mm

EP 1 209 490 A2

# FIG.19

ASTIGMATISM